# EUROPEAN PATENT APPLICATION

(11) **EP 4 336 745 A1**
(43) Date of publication of application: **13.03.2024**
(21) Application number: 22194592.6
(22) Date of filing: 08.09.2022
(51) Int. Cl.: H04B 7/15, H04B 7/26, H04W 76/10, H04W 88/04

(54) **U2U RELAY COMMUNICATION**

(71) Applicant: Nokia Technologies Oy, 02610 Espoo (FI)
(72) Inventor: VAN PHAN, Vinh, Oulu (FI); WOLFNER, György Tamás, Budapest (HU)
(74) Representative: Nokia EPO representatives

(57) **Abstract**

Method comprising:
for a U2U relay communication between UE1 and UE2:
- determining a first local identifier (LID) such that the first LID is unique among all LIDs associated, in a mapping table, with an identifier of a first hop;
- storing, in the mapping table, a first mapping information mapped to a U2U relay communication ID, wherein the first mapping information comprises the identifier of the first hop associated with the first LID; and
- instructing to set up a portion of a connection for the U2U relay communication via the first hop, wherein the instruction comprises the first LID;

supervising whether UE1 intends to transmit data of the U2U relay communication to UE2;
identifying, based on the U2U relay communication ID, an identified mapping information comprising an identifier of an egress hop associated with an identified LID, wherein the identified mapping information is mapped in the mapping table to the U2U relay communication ID; and
transmitting the data comprising the identified LID on the egress hop.

## Description

### Field of the invention

The present disclosure relates to U2U relay communication, e.g. on sidelink.

### Abbreviations

- 3GPP: 3^{rd} Generation Partnership Project
- 5G/6G/7G: 5^{th}/6^{th}/7^{th} Generation
- CP: Control Plane
- C-RNTI: Cell RNTI
- DCA: Direct Communication Accept
- DCR: Direct Communication Request
- DST: Destination
- E2E: End-to-End
- gNB: next Generation NodeB
- HARQ: Hybrid Automatic Repeat Request
- ID: Identifier
- IP: Internet Protocol
- L2: Layer 2 (including typically MAC, RLC, and/or PDCP sub-layers)
- LID: Local ID
- MAC: Medium Access Control
- NR: New Radio
- PDCP: Packet Data Convergence Protocol
- PHY: Physical Layer ( = Layer 1)
- ProSe: Proximity Service
- QoS: Quality of Service
- RD: Relay Discovery
- RLC: Radio Link Control
- RNTI: Radio Network Temporary Identifier
- RRC: Radio Resource Control
- SD: Sidelink Discovery
- SDAP: Service Data Application Protocol
- SL: Sidelink
- SRAP: Sidelink Relay Adaptation Protocol
- SRC: Source
- TMSI: Temporary Mobile Subscriber Identification
- TR: Technical Report
- TS: Technical Specification
- U2N: UE-to-Network
- U2U: UE-to-UE
- UE: User Equipment
- UP: User Plane
- V2X: Vehicle-to-anything

### Background

Objectives for 3GPP Rel-18 sidelink (SL) UE-to-UE (U2U) relays are described in 3GPP RP-221262 as follows:
The objective of this work item is to specify solutions that are needed to enhance NR Sidelink Relay for the V2X, public safety and commercial use cases.
1. Specify mechanisms to support single-hop Layer-2 and Layer-3 UE-to-UE relay (i.e., source UE -> relay UE -> destination UE) for unicast [RAN2, RAN3, RAN4].
   A. Common part for Layer-2 and Layer-3 relay to be prioritized until RAN#98
      i. Relay discovery and (re)selection [RAN2, RAN4]
      ii. Signalling support for Relay and remote UE authorization if SA2 concludes it is needed [RAN3]
   B. Layer-2 relay specific part
      i. UE-to-UE relay adaptation layer design [RAN2]
      ii. Control plane procedures [RAN2]
      iii. QoS handling if needed, subject to SA2 progress [RAN2]
   Note 1A: This work should take into account the forward compatibility for supporting more than one hop in a later release.
   Note 1B: A remote UE is connected to only a single relay UE at a given time for a given destination UE.

3GPP TR 38.836 captures the outcomes of study on SL relays including U2U relays. It has been agreed that adaptation layer is needed for L2 U2U relays as follows, copied from 3GPP TR 38.836:

### 5.5.1 Architecture and Protocol Stack

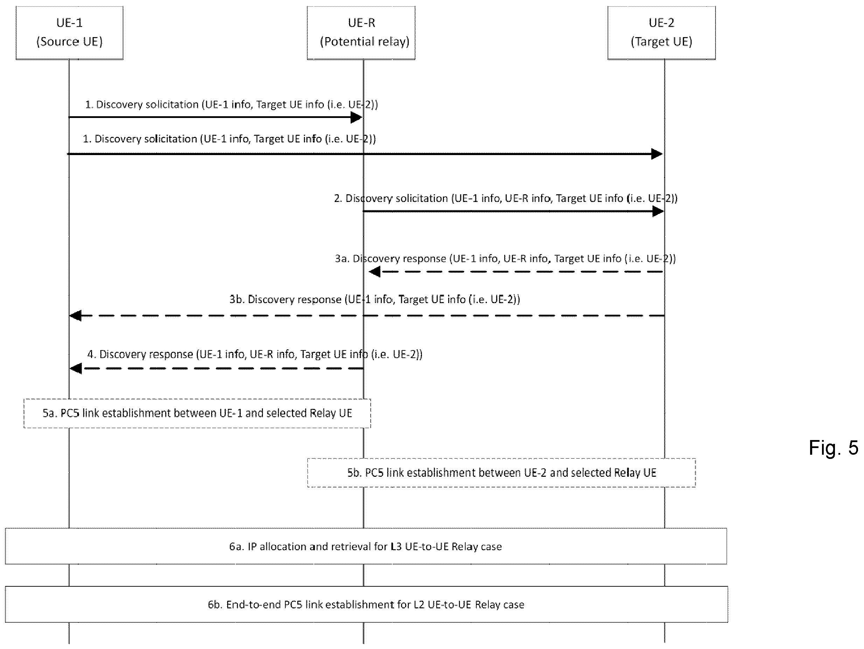

For L2 UE-to-UE Relay architecture, the protocol stacks are similar to L2 UE-to-Network Relay other than the fact that the termination points are two Remote UEs. The protocol stacks for the user plane and control plane of L2 UE-to-UE Relay architecture are described in Figure 5.5.1-1

and Figure 5.5.-2.

An adaptation layer is supported over the second PC5 link (i.e. the PC5 link between Relay UE and Destination UE) for L2 UE-to-UE Relay. For L2 UE-to-UE Relay, the adaptation layer is put over RLC sublayer for both CP and UP over the second PC5 link. The sidelink SDAP/PDCP and RRC are terminated between two Remote UEs, while RLC, MAC and PHY are terminated in each PC5 link.

### For the first hop of L2 UE-to-UE Relay:

- The N:1 mapping is supported by first hop PC5 adaptation layer between Remote UE SL Radio Bearers and first hop PC5 RLC channels for relaying.
- The adaptation layer over first PC5 hop between Source Remote UE and Relay UE supports to identify traffic destined to different Destination Remote UEs.

### For the second hop of L2 UE-to-UE Relay:

- The second hop PC5 adaptation layer can be used to support bearer mapping between the ingress RLC channels over first PC5 hop and egress RLC channels over second PC5 hop at Relay UE.
- PC5 Adaptation layer supports the N:1 bearer mapping between multiple ingress PC5 RLC channels over first PC5 hop and one egress PC5 RLC channel over second PC5 hop and supports the Remote UE identification function.

### For L2 UE-to-UE Relay:

- The identity information of Remote UE end-to-end Radio Bearer is included in the adaptation layer in first and second PC5 hop.
- In addition, the identity information of Source Remote UE and/or the identity information of Destination Remote UE are candidate information to be included in the adaptation layer, which are to be decided in WI phase.

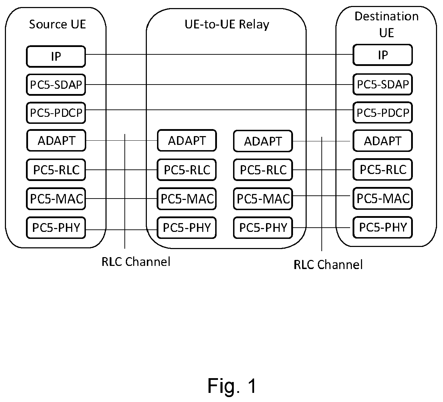

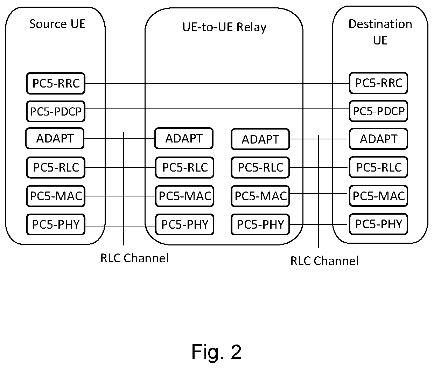

Fig. 1 shows a user plane protocol stack for L2 UE-to-UE relay, and Fig. 2 shows a control plane protocol stack for L2 UE-to-UE relay. The adaptation layer is shown directly on top of the RLC layer and below the PDCP layer.

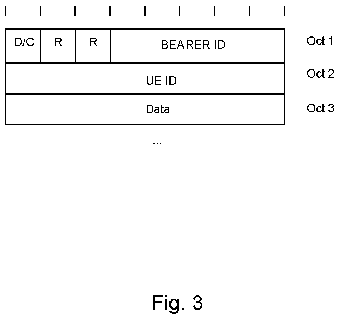

3GPP TS 38.351 specifies SL Relay Adaptation Protocol (SRAP) for L2 U2N relays. Fig. 3 (copied from 3GPP TS 38.351) shows how a 8-bit UE ID is used to indicate the Local ID of the Remote UE in SRAP PDU header:
According to 3GPP TS 23.303, clause 5.3.1.2, the following models A and B for ProSe Direct Discovery exist:

### Model A ("I am here")

This model defines two roles for the ProSe-enabled UEs that are participating in ProSe Direct Discovery.
- Announcing UE: The UE announces certain information that could be used by UEs in proximity that have permission to discover.
- Monitoring UE: The UE that monitors certain information of interest in proximity of announcing UEs.
In this model the announcing UE broadcasts discovery messages at pre-defined discovery intervals and the monitoring UEs that are interested in these messages read them and process them.

Model A is equivalent to "I am here" because the announcing UE would broadcast information about itself e.g. its ProSe Application Code in the discovery message.

### Model B ("who is there?" / "are you there?")

This model defines two roles for the ProSe-enabled UEs that are participating in ProSe Direct Discovery.
- **Discoverer UE:** The UE transmits a request containing certain information about what it is interested to discover.
- **Discoveree UE:** The UE that receives the request message can respond with some information related to the discoverer's request.
Model B is equivalent to "who is there/are you there" since the discoverer UE sends information about other UEs that it would like to receive responses from, e.g. the information can be about a ProSe Application Identity corresponding to a group and the members of the group can respond.

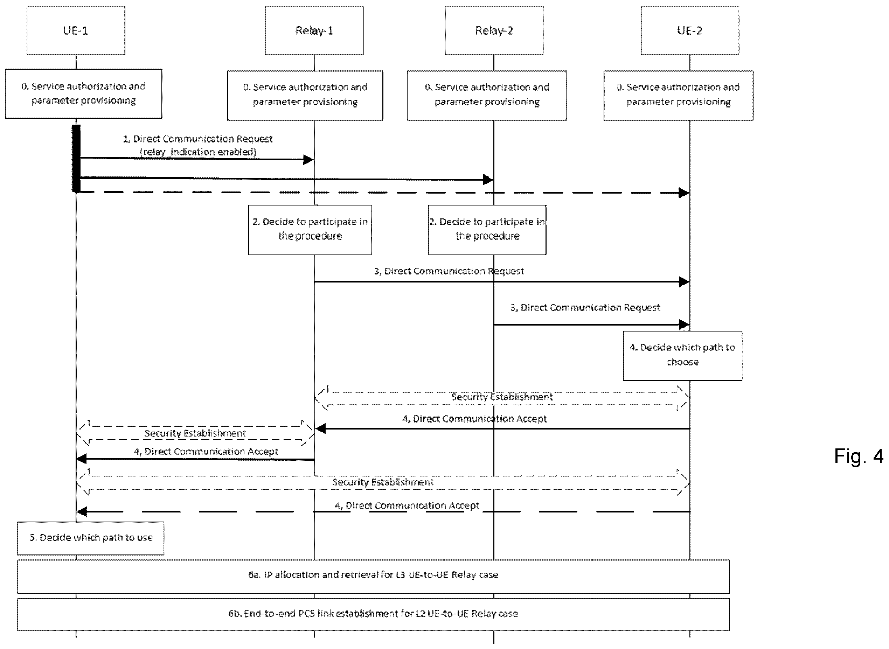

3GPP TR 23.700-33 presents a collection of high-level solutions for support of SL U2U relays. In Section 6.1 of 3GPP TR 23.700-33, it is suggested integrating the discovery of DST UE and the discovery and selection of SL U2U Relay UEs together. 3GPP TR 23.700-33 discloses two alternatives:
- Alternative 1 (shown in Fig. 4): UE-to-UE relay discovery and selection can be integrated into the unicast link establishment procedure as described in clause 6.4.3.1 of 3GPP TS 23.304.
- Alternative 2 (shown in Fig. 5): UE-to-UE relay discovery and selection is integrated into Model B direct discovery procedure.

Basically, according to the Alternative 1 (Fig. 4), UE-1 (SRC UE) broadcasts a DCR for a direct communication with UE-2 (DST UE) indicating that relaying is admitted. UE-2 may not receive the DCR because it is remote from UE-1 (indicated by a dashed arrow in Fig. 4), but the UE Relay-1 and UE Relay-2 are in proximity of both UE-1 and UE-2, receive DCR broadcast from UE-1, and decide to participate in the relaying. Accordingly, they broadcast another DCR which is received by UE-2. UE-2 decides which Relay UE to accept (here: UE Relay-1 is selected). After establishing a security context, UE-2 sends DCA to the selected Relay UE (UE Relay-1), which forwards the same to UE-1. Thus, the connection for the U2U communication between UE-1 and UE-2 is established by establishing direct communication between UE-1 and UE Relay-1 and direct communication between UE Relay-1 and UE-2 and relaying these direct communications at UE Relay-1. According to the Alternative 1, the selection of the relay UEs participating in the connection is made in the direction from the DST UE to the SRC UE.

According to the Alternative 2 (Fig. 5), UE-1 (SRC UE) broadcasts discovery solicitation indicating that he wants to set up a connection with UE-2 for U2U communication. UE-R receives the discovery solicitation. Since it recognizes that UE-R (itself) is not the DST UE, it broadcasts a corresponding discovery solicitation. Although Fig. 5 shows that UE-2 receives the discovery solicitation from UE-1, too, it is assumed that UE-2 does not receive it from UE-1 but from UE-R only. UE-2 and UE-R reply by discovery response. If plural UE-Rs reply by a respective discovery response, UE-1 may select one of them for relaying. Then, the PC5 links for direct communication between UE-1 and UE-R and between UE-R and UE-2 and the relaying of these direct communications at UE-R are established such that the connection for the U2U communication between UE-1 and UE-2 is set up. According to the Alternative 2, the selection of the relay UEs participating in the connection is made in the direction from the SRC UE to the DST UE.

### Summary

It is an object of the present invention to improve the prior art.

According to a first aspect of the invention, there is provided an apparatus comprising:
one or more processors, and
memory storing instructions that, when executed by the one or more processors, cause the apparatus to perform:
   for each of one or more terminal-to-terminal relay communications between a respective source terminal and a respective destination terminal:
      - monitoring, whether a relay terminal receives, on a respective first hop terminating at the relay terminal, a request to set up a first portion of a connection for the respective terminal-to-terminal relay communication via the respective first hop, wherein the request comprises a respective first local identifier;
      - determining, if the relay terminal receives the request, a respective second local identifier such that the respective second local identifier is unique among all local identifiers associated, in a mapping table, with an identifier of a respective second hop terminating at the relay terminal;
      - storing, in the mapping table, a respective first mapping information mapped to a respective second mapping information, wherein the respective first mapping information comprises the identifier of the respective first hop associated with the respective first local identifier, and the respective second mapping information comprises the identifier of the respective second hop associated with the respective second local identifier; and
      - instructing to set up a second portion of the connection for the respective terminal-to-terminal relay communication via the respective second hop, wherein the instruction comprises the respective second local identifier;
   supervising whether the relay terminal receives, on an ingress hop terminating at the relay terminal, data of one of the one or more terminal-to-terminal relay communications comprising a third local identifier;
   identifying, based on a third mapping information comprising an identifier of the ingress hop associated with the third local identifier, a fourth mapping information comprising an identifier of an egress hop associated with a fourth local identifier if the relay terminal receives, on the ingress hop, the data of the one of the one or more terminal-to-terminal relay communications comprising the third local identifier, wherein the fourth mapping information is mapped in the mapping table to the third mapping information, and the egress hop terminates at the relay terminal; and
   forwarding the data of the one of the one or more terminal-to-terminal relay communications comprising the fourth local identifier on the egress hop.

The instructions, when executed by the one or more processors, may further cause the apparatus to perform:
monitoring whether the relay terminal receives a first command to form the first portion of the connection for a first terminal-to-terminal relay communication of the one or more terminal-to-terminal relay communications via a fifth hop different from the second hop after the first portion of the connection for the first terminal-to-terminal relay communication was formed via the first hop, wherein the first command comprises a fifth local identifier, and the fifth hop terminates at the relay terminal;
replacing, in the mapping table, the first mapping information for the first terminal-to-terminal relay communication by a fifth mapping information, wherein the fifth mapping information comprises an identifier of the fifth hop associated with the fifth local identifier.

The instructions, when executed by the one or more processors, may further cause the apparatus to perform:
monitoring whether the relay terminal receives a second command to form the second portion of the connection for a second terminal-to-terminal relay communication of the one or more terminal-to-terminal relay communications via a sixth hop different from the second hop after the second portion of the connection for the second terminal-to-terminal relay communication was formed via the second hop, wherein the sixth hop terminates at the relay terminal;
determining a sixth local identifier such that the sixth local identifier is unique among all local identifiers associated, in the mapping table, with an identifier of the sixth hop if the relay terminal receives the second command;
replacing, in the mapping table, the second mapping information for the second terminal-to-terminal relay communication by a sixth mapping information, wherein the sixth mapping information comprises the identifier of the sixth hop associated with the sixth local identifier; and
instructing to set up the second portion of the connection for the second terminal-to-terminal relay communication via the respective sixth hop, wherein the instruction comprises the sixth local identifier.

For at least one of the one or more terminal-to-terminal relay communications:
the request to set up the first portion of the connection for the respective terminal-to-terminal relay communication via the respective first hop may comprise a first direct communication accept command; and
the instruction to set up the second portion of the connection for the respective terminal-to-terminal relay communication via the respective second hop may comprise a second direct communication accept command.

For at least one of the one or more terminal-to-terminal relay communications:
the request to set up the first portion of the connection for the respective terminal-to-terminal relay communication via the respective first hop may comprise a first direct communication request command; and
the instruction to set up the second portion of the connection for the respective terminal-to-terminal relay communication via the respective second hop may comprise a second direct communication request command.

For each of the one or more terminal-to-terminal relay communications, at least one of the following identifiers may be a layer 2 identifier of a corresponding neighbor terminal, or each of the following identifiers may be the layer 2 identifier of the corresponding neighbor terminal:
- the identifier of the respective first hop,
- the identifier of the respective second hop,
- the identifier of the respective third hop, or
- the identifier of the respective fourth hop;
wherein the corresponding neighbor terminal is connected to the relay terminal via the corresponding one of the respective first hop, the respective second hop, the respective third hop, or the respective fourth hop.

For each of the one or more terminal-to-terminal relay communications, at least one of:
the respective first local identifier may be shorter than a layer 2 identifier; or
the respective second local identifier may be shorter than a layer 2 identifier.

The instructions, when executed by the one or more processors, may further cause the apparatus to perform, for each of the one or more terminal-to-terminal relay communications:
the determining the respective second local identifier without taking into account at least one of the following identifiers or without taking into account any of the following identifiers:
- an identifier of the respective source terminal,
- an identifier of the respective destination terminal,
- the identifier of the respective first hop, or
- the respective first local identifier.

The data may comprise a protocol data unit of a sidelink relay adaptation layer used for the terminal-to-terminal relay communication, and a header of the protocol data unit may include the third local identifier.

According to a second aspect of the invention, there is provided an apparatus comprising:
one or more processors, and
memory storing instructions that, when executed by the one or more processors, cause the apparatus to perform:
   for each of one or more terminal-to-terminal relay communications between a first endpoint terminal and a respective second endpoint terminal:
      - determining a respective first local identifier such that the respective first local identifier is unique among all local identifiers associated, in a mapping table, with an identifier of a respective first hop terminating at the first endpoint terminal;
      - storing, in the mapping table, a respective first mapping information mapped to an identifier of the respective terminal-to-terminal relay communication, wherein the respective first mapping information comprises the identifier of the respective first hop associated with the respective first local identifier; and
      - instructing to set up a first portion of a connection for the respective terminal-to-terminal relay communication via the respective first hop, wherein the instruction comprises the respective first local identifier;
   supervising whether the first endpoint terminal intends to transmit data of one of the one or more terminal-to-terminal relay communications to the respective second endpoint terminal;
   identifying, based on the identifier of the one of the one or more terminal-to-terminal relay communication, an identified mapping information comprising an identifier of an egress hop associated with an identified local identifier if the first endpoint terminal intends to transmit the data of the one of the one or more terminal-to-terminal relay communications, wherein the identified mapping information is mapped in the mapping table to the identifier of the one of the one or more terminal-to-terminal relay communications, and the egress hop terminates at the first endpoint terminal; and
   transmitting the data of the one of the one or more terminal-to-terminal relay communications comprising the identified local identifier on the egress hop.

The instructions, when executed by the one or more processors, may further cause the apparatus to perform:
monitoring whether the first endpoint terminal intends to form the first portion of the connection for a first terminal-to-terminal relay communication of the one or more terminal-to-terminal relay communications via a second hop different from the first hop after the first portion of the connection for the first terminal-to-terminal relay communication was formed via the first hop, wherein the second hop terminates at the first endpoint terminal;
determining a second local identifier such that the second local identifier is unique among all local identifiers associated, in the mapping table, with an identifier of the second hop if the first endpoint terminal intends to form the first portion of the connection for the first terminal-to-terminal relay communication via the second hop;
replacing, in the mapping table, the first mapping information by a second mapping information, wherein the second mapping information comprises the identifier of the second hop associated with the second local identifier; and
instructing to set up the first portion of the connection for the first terminal-to-terminal relay communication via the second hop, wherein the instruction comprises the second local identifier.

For each of the one or more terminal-to-terminal relay communications, at least one of the following identifiers may be a layer 2 identifier of a corresponding neighbor terminal, or each of the following identifiers may be the layer 2 identifier of the corresponding neighbor terminal:
- the identifier of the respective first hop, or
- the identifier of the egress hop;
wherein the respective first hop or the egress hop terminates at the corresponding neighbor terminal and the first endpoint terminal.

For each of the one or more terminal-to-terminal relay communications:
the respective first local identifier may be shorter than a layer 2 identifier.

The instructions, when executed by the one or more processors, may further cause the apparatus to perform, for each of the one or more terminal-to-terminal relay communications:
the determining the respective first local identifier without taking into account at least one of the following identifiers or without taking into account any of the following identifiers:
- an identifier of the first endpoint terminal,
- an identifier of the respective second endpoint terminal, or
- the identifier of the respective first hop.

For at least one of the one or more terminal-to-terminal relay communications:
the first endpoint terminal may be a source terminal of the respective terminal-to-terminal relay communication; and
the instruction to set up the first portion of the connection for the respective terminal-to-terminal relay communication via the respective first hop may comprise a direct communication request command.

For at least one of the one or more terminal-to-terminal relay communications:
the first endpoint terminal may be a destination terminal of the respective terminal-to-terminal relay communication; and
the instruction to set up the first portion of the connection for the respective terminal-to-terminal relay communication via the respective first hop may comprise a direct communication accept command.

According to a third aspect of the invention, there is provided a method comprising:
for each of one or more terminal-to-terminal relay communications between a respective source terminal and a respective destination terminal:
   - monitoring, whether a relay terminal receives, on a respective first hop terminating at the relay terminal, a request to set up a first portion of a connection for the respective terminal-to-terminal relay communication via the respective first hop, wherein the request comprises a respective first local identifier;
   - determining, if the relay terminal receives the request, a respective second local identifier such that the respective second local identifier is unique among all local identifiers associated, in a mapping table, with an identifier of a respective second hop terminating at the relay terminal;
   - storing, in the mapping table, a respective first mapping information mapped to a respective second mapping information, wherein the respective first mapping information comprises the identifier of the respective first hop associated with the respective first local identifier, and the respective second mapping information comprises the identifier of the respective second hop associated with the respective second local identifier; and
   - instructing to set up a second portion of the connection for the respective terminal-to-terminal relay communication via the respective second hop, wherein the instruction comprises the respective second local identifier;
supervising whether the relay terminal receives, on an ingress hop terminating at the relay terminal, data of one of the one or more terminal-to-terminal relay communications comprising a third local identifier;
identifying, based on a third mapping information comprising an identifier of the ingress hop associated with the third local identifier, a fourth mapping information comprising an identifier of an egress hop associated with a fourth local identifier if the relay terminal receives, on the ingress hop, the data of the one of the one or more terminal-to-terminal relay communications comprising the third local identifier, wherein the fourth mapping information is mapped in the mapping table to the third mapping information, and the egress hop terminates at the relay terminal; and
forwarding the data of the one of the one or more terminal-to-terminal relay communications comprising the fourth local identifier on the egress hop.

The method may further comprise:
monitoring whether the relay terminal receives a first command to form the first portion of the connection for a first terminal-to-terminal relay communication of the one or more terminal-to-terminal relay communications via a fifth hop different from the second hop after the first portion of the connection for the first terminal-to-terminal relay communication was formed via the first hop, wherein the first command comprises a fifth local identifier, and the fifth hop terminates at the relay terminal;
replacing, in the mapping table, the first mapping information for the first terminal-to-terminal relay communication by a fifth mapping information, wherein the fifth mapping information comprises an identifier of the fifth hop associated with the fifth local identifier.

The method may further comprise:
monitoring whether the relay terminal receives a second command to form the second portion of the connection for a second terminal-to-terminal relay communication of the one or more terminal-to-terminal relay communications via a sixth hop different from the second hop after the second portion of the connection for the second terminal-to-terminal relay communication was formed via the second hop, wherein the sixth hop terminates at the relay terminal;
determining a sixth local identifier such that the sixth local identifier is unique among all local identifiers associated, in the mapping table, with an identifier of the sixth hop if the relay terminal receives the second command;
replacing, in the mapping table, the second mapping information for the second terminal-to-terminal relay communication by a sixth mapping information, wherein the sixth mapping information comprises the identifier of the sixth hop associated with the sixth local identifier; and
instructing to set up the second portion of the connection for the second terminal-to-terminal relay communication via the respective sixth hop, wherein the instruction comprises the sixth local identifier.

For at least one of the one or more terminal-to-terminal relay communications:
the request to set up the first portion of the connection for the respective terminal-to-terminal relay communication via the respective first hop may comprise a first direct communication accept command; and
the instruction to set up the second portion of the connection for the respective terminal-to-terminal relay communication via the respective second hop may comprise a second direct communication accept command.

For at least one of the one or more terminal-to-terminal relay communications:
the request to set up the first portion of the connection for the respective terminal-to-terminal relay communication via the respective first hop may comprise a first direct communication request command; and
the instruction to set up the second portion of the connection for the respective terminal-to-terminal relay communication via the respective second hop may comprise a second direct communication request command.

For each of the one or more terminal-to-terminal relay communications, at least one of the following identifiers may be a layer 2 identifier of a corresponding neighbor terminal, or each of the following identifiers may be the layer 2 identifier of the corresponding neighbor terminal:
- the identifier of the respective first hop,
- the identifier of the respective second hop,
- the identifier of the respective third hop, or
- the identifier of the respective fourth hop;
wherein the corresponding neighbor terminal is connected to the relay terminal via the corresponding one of the respective first hop, the respective second hop, the respective third hop, or the respective fourth hop.

For each of the one or more terminal-to-terminal relay communications, at least one of:
the respective first local identifier may be shorter than a layer 2 identifier; or
the respective second local identifier may be shorter than a layer 2 identifier.

The determining the respective second local identifier may be performed without taking into account at least one of the following identifiers or without taking into account any of the following identifiers:
- an identifier of the respective source terminal,
- an identifier of the respective destination terminal,
- the identifier of the respective first hop, or
- the respective first local identifier.

The data may comprise a protocol data unit of a sidelink relay adaptation layer used for the terminal-to-terminal relay communication, and a header of the protocol data unit may include the third local identifier.

According to a fourth aspect of the invention, there is provided a method comprising:
for each of one or more terminal-to-terminal relay communications between a first endpoint terminal and a respective second endpoint terminal:
   - determining a respective first local identifier such that the respective first local identifier is unique among all local identifiers associated, in a mapping table, with an identifier of a respective first hop terminating at the first endpoint terminal;
   - storing, in the mapping table, a respective first mapping information mapped to an identifier of the respective terminal-to-terminal relay communication, wherein the respective first mapping information comprises the identifier of the respective first hop associated with the respective first local identifier; and
   - instructing to set up a first portion of a connection for the respective terminal-to-terminal relay communication via the respective first hop, wherein the instruction comprises the respective first local identifier;
supervising whether the first endpoint terminal intends to transmit data of one of the one or more terminal-to-terminal relay communications to the respective second endpoint terminal;
identifying, based on the identifier of the one of the one or more terminal-to-terminal relay communication, an identified mapping information comprising an identifier of an egress hop associated with an identified local identifier if the first endpoint terminal intends to transmit the data of the one of the one or more terminal-to-terminal relay communications, wherein the identified mapping information is mapped in the mapping table to the identifier of the one of the one or more terminal-to-terminal relay communications, and the egress hop terminates at the first endpoint terminal; and
transmitting the data of the one of the one or more terminal-to-terminal relay communications comprising the identified local identifier on the egress hop.

The method may further comprise:
monitoring whether the first endpoint terminal intends to form the first portion of the connection for a first terminal-to-terminal relay communication of the one or more terminal-to-terminal relay communications via a second hop different from the first hop after the first portion of the connection for the first terminal-to-terminal relay communication was formed via the first hop, wherein the second hop terminates at the first endpoint terminal;
determining a second local identifier such that the second local identifier is unique among all local identifiers associated, in the mapping table, with an identifier of the second hop if the first endpoint terminal intends to form the first portion of the connection for the first terminal-to-terminal relay communication via the second hop;
replacing, in the mapping table, the first mapping information by a second mapping information, wherein the second mapping information comprises the identifier of the second hop associated with the second local identifier; and
instructing to set up the first portion of the connection for the first terminal-to-terminal relay communication via the second hop, wherein the instruction comprises the second local identifier.

For each of the one or more terminal-to-terminal relay communications, at least one of the following identifiers may be a layer 2 identifier of a corresponding neighbor terminal, or each of the following identifiers may be the layer 2 identifier of the corresponding neighbor terminal:
- the identifier of the respective first hop, or
- the identifier of the egress hop;
wherein the respective first hop or the egress hop terminates at the corresponding neighbor terminal and the first endpoint terminal.

For each of the one or more terminal-to-terminal relay communications:
the respective first local identifier may be shorter than a layer 2 identifier.

The determining the respective first local identifier may be performed without taking into account at least one of the following identifiers or without taking into account any of the following identifiers:
- an identifier of the first endpoint terminal,
- an identifier of the respective second endpoint terminal, or
- the identifier of the respective first hop.

For at least one of the one or more terminal-to-terminal relay communications:
the first endpoint terminal may be a source terminal of the respective terminal-to-terminal relay communication; and
the instruction to set up the first portion of the connection for the respective terminal-to-terminal relay communication via the respective first hop may comprise a direct communication request command.

For at least one of the one or more terminal-to-terminal relay communications:
the first endpoint terminal may be a destination terminal of the respective terminal-to-terminal relay communication; and
the instruction to set up the first portion of the connection for the respective terminal-to-terminal relay communication via the respective first hop may comprise a direct communication accept command.

Each of the methods of the third and fourth aspects may be a method of U2U relay communication.

According to a fifth aspect of the invention, there is provided a computer program product comprising a set of instructions which, when executed on an apparatus, is configured to cause the apparatus to carry out the method according to any of the third and fourth aspects. The computer program product may be embodied as a computer-readable medium or directly loadable into a computer.

According to some embodiments of the invention, at least one of the following advantages may be achieved:
- protocol overhead in U2U relay communication may be reduced;
- latency may be minimized;
- additional signaling effort may be small;
- multi-hop U2U relays may be supported;
- robustness against modifications of L2 IDs of any UE involved in the E2E communication.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a user plane protocol stack for L2 UE-to-UE relay (according to 3GPP TR 38.836, Fig. 5.5.1-1);
Fig. 2 shows a control plane protocol stack for L2 UE-to-UE relay (according to 3GPP TR 38.836, Fig. 5.5.1-2);
Fig. 3 shows a SRAP Data PDU format with SRAP header for U2N relay (according to 3GPP TS 38.351, Fig. 6.2.2-1);
Fig. 4 shows 5G ProSe UE-to-UE relay selection, Alternative 1 (according to 3GPP TR 23.700-33, Fig. 6.1.2.1-1);
Fig. 5 shows 5G ProSe UE-to-UE relay selection, Alternative 2 (according to 3GPP TR 23.700-33, Fig. 6.1.2.2-1)
Fig. 6 shows a message sequence chart according to some example embodiments of the invention;
Fig. 7 shows a message sequence chart according to some example embodiments of the invention;
Fig. 8 illustrates set up of connections for several U2U relay communications according to some example embodiments of the invention;
Fig. 9 shows an apparatus according to an example embodiment of the invention;
Fig. 10 shows a method according to an example embodiment of the invention;
Fig. 11 shows an apparatus according to an example embodiment of the invention;
Fig. 12 shows a method according to an example embodiment of the invention; and
Fig. 13 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Some example embodiments of the invention may solve or overcome the technical problem how to include the identity information of the Source Remote UE (herein also denoted as Source UE) and/or the identity information of the Destination Remote UE (herein also denoted as Destination UE) into the adaptation layer.

It is known from a study on SL relays as well as the specification of Rel-17 L2 U2N relays that assigning a short ID to the SRC UE and to the DST UE for addressing the corresponding UE in L2 relay adaptation layer is preferable over, e.g., using an existing ID such as ProSe L2 ID, C-RNTI, or TMSI of the corresponding UE. This short ID may be similar to the Local ID assigned to a Remote UE unique to the serving Relay UE in Rel-17 L2 U2N relays. Assigning the short ID is preferable because multiplexing of data from different SRC UEs or DST UEs (Remote UEs in L2 U2N relays) is supported in L2 U2U relays (L2 U2N relays) and using the short ID (8-bit UE ID shown in Fig. 3 for L2 U2N relays) allows to reduce the protocol overhead significantly.

In U2U relays, a SRC UE may use a same serving U2U Relay UE to connect to different DST UEs, or different SRC UEs may use the same serving U2U Relay UE to connect to the same DST UE. In the former case, for the direction from the SRC UE to the DST UE, multiplexing of data from the same SRC UE to different DST UEs at the SRC UE or the serving U2U Relay UE other than the last-hop serving U2U Relay UE on L2 U2U relay adaptation layer is possible. For the direction from the DST UE to the SRC UE, multiplexing of data to the same SRC UE from different DST UEs at serving U2U Relay UE(s) on L2 U2U relay adaptation layer is possible. In the latter case, similar multiplexing of data to/from the same DST UE is possible.

In Rel-17 L2 U2N relays, the Local ID of the Remote UE is locally unique to the serving L2 U2N Relay UE. The local ID is assigned to both the Remote UE and the Relay UE by the serving gNB using e.g. RRC Reconfiguration procedure (see 3GPP TS 38.331). In L2 U2U relays assigning such local IDs by the gNB (or another centralized control entity) is not possible because L2 U2U communication is not controlled centrally.

For explaining some example embodiments of the present invention, first, some terms are explained. A "hop" is a direct connection between two UEs. That is, via a hop, the UEs at the endpoints of the hop may communicate directly with each other via a PC5 link. At each endpoint of the hop, the hop may be designated by an ID of the other endpoint. However, in some example embodiments, the hop may be identified by some hop ID, which may be mapped unambiguously to the ID of the other endpoint.

A U2U relay communication goes via at least two hops. Each hop forms a portion of the connection for the U2U relay communication. The UEs in the middle of this U2U relay communication relays the direct communications of the hops terminating at these UEs.

For establishing (setting up) a U2U relay communication, any of the Alternatives 1 and 2 discussed in the prior art section may be used. That is, the endpoints of the U2U relay communication may be designated as SRC UE and DST UE, wherein the SRC UE initiates the establishing of the connection for the U2U relay communication. According to the Alternative 1, the DST UE selects a hop to one relay UE, which then selects a hop to another relay UE or to the SRC UE etc. For setting up the direct communications on the hops, DCA is transmitted on the respective hop, in the direction from DST UE to SRC UE.

For the Alternative 2, the SRC UE selects a first relay UE which in turn selects another relay UE or the DST UE, etc. In this alternative, DCR is used to set up the direct communication on the respective hops.

According to some example embodiments, on each of the hops forming the U2U relay communication, local IDs (LID) identify the different U2U relay communications. Each LID is unique on the respective hop. That is, if there are two U2U relay communications over the hop, these two U2U relay communications have different LIDs on the respective hop. However, on different hops of the U2U relay communication, different LIDs or the same LID may be assigned to the U2U relay communication.

At one UE, the same LID may be used on different hops. For example, the same LID may be used for the same U2U relay communication on the hop towards SRC UE and on the hop towards DST UE, and/or the same LID may be used on different hops for different U2U relay communications going through the UE.

Each relay UE maintains a mapping table, wherein different pieces of mapping information are mapped to each other. For each of the U2U relay communications, the mapping information maps a first mapping information with a second mapping information. The first mapping information comprises an ID of a hop terminating at the respective UE, which forms a portion of the connection for the U2U relay communication associated with the LID for this U2U relay communication on this hop. The second mapping information comprises an ID of the other hop terminating at the UE and forming a portion of the connection for the U2U relay communication associated with the LID for the U2U relay communication on this other hop.

Each endpoint UE (SRC UE, DST UE) of the U2U relay communication maintains a mapping table, too. In this mapping table, the first mapping information (as described in the previous paragraph) is mapped to an identifier of the U2U relay communication.

Since a UE may be both a relay UE of one U2U relay communication and an endpoint UE of another U2U relay communication, a UE may maintain both of these mapping tables. In this case, these two mapping tables may be considered as one (combined) mapping table.

If a U2U relay communication is established, each of the SRC UE and the DST UE may transmit data of the U2U relay communication via the established connection. That is, the SRC UE may be a TX UE or a RX UE, and DST UE may be a RX UE or a TX UE, respectively. When a TX UE transmits data via the U2U relay communication to the RX UE, it includes the LID of the U2U relay communication for the hop terminating at the TX UE into the PDU of a L2 U2U sidelink relay adaptation protocol sub-layer for example (preferably into the header thereof). The relay UE at the other endpoint of this hop recognizes the ID of the TX UE and the LID included in the PDU. In the mapping table of this relay UE, this combination is mapped to an ID of another link and a LID of the U2U relay communication for the other link. Accordingly, the relay UE forwards the data on the other link and includes the LID for the other link into the PDU, instead of the LID received from the SRC UE. This procedure is continued until the data reach the RX UE. In some example embodiments, the LID may be omitted on the last hop to the RX UE.

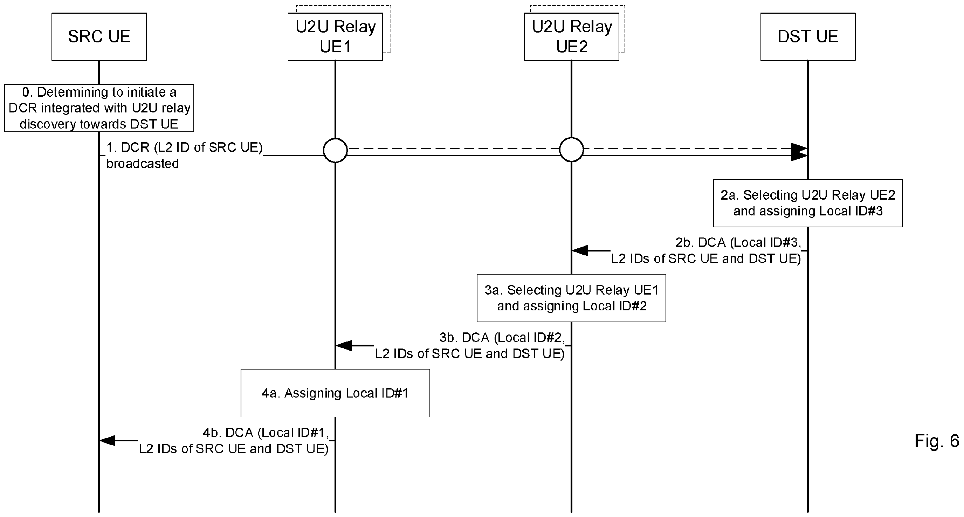

Fig. 6 illustrates the establishing of the connection for the U2U relay communication between a SRC UE and a DST UE according to some example embodiments of the invention. As shown in Fig. 6, the SRC UE determines to initiate a DCR towards the DST UE. In the DCR, it is indicated that relaying is acceptable. The SRC UE broadcasts DCR, which comprises the ID of the SRC UE (such as the L2 ID of the SRC UE). It also comprises an ID of the DST UE. This ID may be a L2 ID of the DST UE or an ID of the DST UE of a higher layer.

DCR broadcasted by the SRC UE is received by U2U relay UE1, but not by the DST UE. U2U relay UE1 understands that this DCR is not intended for itself, and broadcasts another DCR. This DCR comprises an ID of the U2U relay UE1 (such as a L2 ID of this UE), and again the ID of the DST UE. In the example of Fig. 6, this procedure is repeated at U2U relay UE2. Finally, DST UE receives the DCR. Potentially, the DST UE receives the DCR from different relay UEs. In this case, the DST UE selects one of the relay UEs from which it received DCR for the first hop. Accordingly, DST UE replies to the DCR by DCA. This DCA comprises not only the L2 IDs of the SRC ID and of the DST UE, but in addition a LID (LID#3), which designates the U2U relay communication between the SRC UE and the DST UE on the hop between the DST UE and the selected U2U relay UE2. The LID#3 is unique on the hop between DST UE and U2U relay UE2.

Correspondingly, U2U relay UE2 may have received DCR from several U2U relay UE1. Accordingly it selects one of them and sends DCA to the selected U2U relay UE1. This DCA comprises again the L2 IDs of the SRC UE and the DST UE (which designate the specific U2U relay communication), and a LID#2. The LID#2 is unique on the hop between U2U relay UE2 and U2U relay UE1. U2U relay UE2 maintains in the mapping table a record comprising an ID of the hop between U2U relay UE2 and the DST UE associated with the LID#3 mapped with an ID of the hop between U2U relay UE2 and U2U relay UE1 associated with the LID#2. LID#3 and LID#2 may be the same or different from each other. The corresponding procedure is performed on U2U relay UE1, which selects a hop to the SRC UE and includes LID#1 into DCA to the SRC ID. LID#1 is unique on the hop between SRC UE and U2U relay UE1. U2U relay UE1 maintains a mapping table which comprises a record comprising the ID of the hop between U2U relay UE1 and U2U relay UE2 associated with the LID#2 mapped to the ID of the hop between SRC UE and U2U relay UE1 associated with LID#1.

SRC UE and DST UE store in their respective mapping tables an ID of the U2U relay communication (which may be the ID (such as the L2 ID) of the other of the SRC UE and the DST UE), mapped to an ID of the respective link terminating at the SRC UE and the DST UE, respectively, together with the LID of the respective link (LID#1 on SRC UE, LID#3 on DST UE).

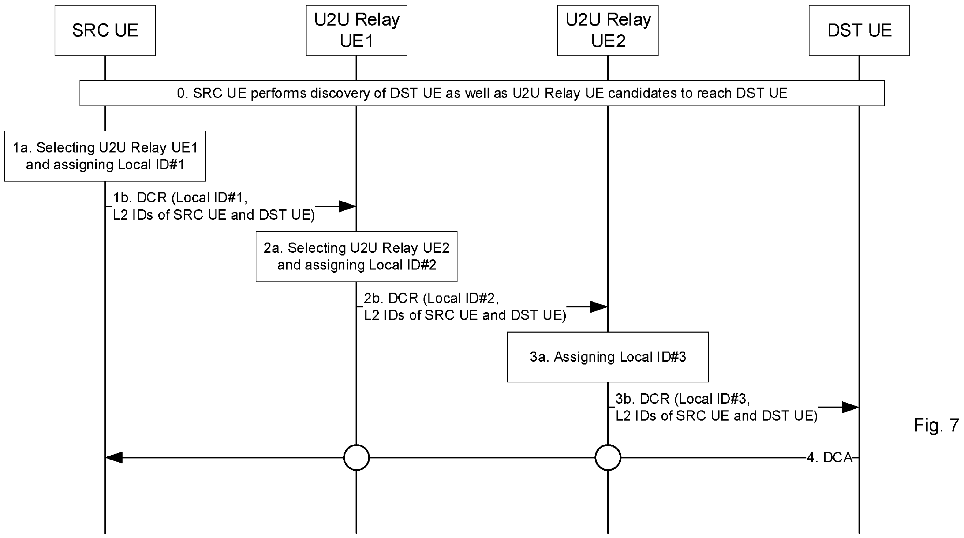

Fig. 7 shows a message sequence chart of alternative 2 according to some example embodiments of the invention. As shown in Fig. 7, the SRC UE first performs discovery of the DST UE as well as of U2U relay UE candidates to reach the DST UE. Then, the SRC UE selects one hop (to U2U relay UE1) and assigns a LID#1 to the U2U relay communication for this hop. The LID#1 is unique on the hop between SRC UE and U2U relay UE1. SRC UE sends DCR comprising LID#1 and the L2 IDs of SRC UE and DST UE to the selected U2U relay UE1. Correspondingly, U2U relay UE1 selects a U2U relay UE2 and determines LID#2, which is unique on the hop between U2U relay UE1 and U2U relay UE2. U2U relay UE1 sends DCR comprising LID#2 and the L2 IDs of SRC UE and DST UE to the selected U2U relay UE2. U2U relay UE2 performs corresponding operations as U2U relay UE1 and assigns LID#3, which is unique on the next hop (i.e. the hop between U2U relay UE2 and DST UE). Then U2U relay UE2 sends DCR to the DST UE, wherein DCR comprises LID#3.

U2U relay UE1 and U2U relay UE2 each maintain a mapping table comprising a record for the specific U2U relay communication. In the record, they store IDs of the hops terminating at the relay UE used in the U2U relay communication, each associated with their respective LID. In the SRC UE and the DST UE, a corresponding mapping table comprises a mapping between an ID of the U2U relay communication (such as L2 ID of the other one of the SRC UE and the DST UE) mapped to an ID of the hop terminating at the respective one of the SRC UE and the DST UE associated with the LID for the U2U relay communication on this hop.

Note that in both Alternatives 1 and 2, the respective UE may determine the one of the LID completely independent from any UE IDs, such as the IDs of the other relay UEs, an ID of the SRC UE or an ID of the DST UE. The only condition the respective UE has to observe is that each of the LIDs on a respective hop is unique on the respective hop.

When the connection for the U2U relay communication is set up, each of the SRC UE and the DST UE may transmit data to the other one of the SRC UE and the DST UE via the U2U relay communication. This is explained in the example of Fig. 6 for a case, that the SRC UE transmits the data to the DST UE. I.e., the SRC UE is TX UE, and the DST UE is RX UE. In this case, the SRC UE transmits the data on the hop to U2U relay UE1 in a direct U2U communication. The PDU carrying the data on U2U SRAP sub-layer comprises the LID#1 (e.g., Local UE ID field in the header of the PDU is set to LID#1). U2U relay UE1 understands that the PDU is received on the hop from SRC UE and comprises LID#1. In its mapping table, an ID of the hop to U2U relay UE2 and LID#2 are mapped to the combination of the ID of the hop to SRC UE and the LID#1. Accordingly, U2U relay UE1 forwards the received PDU to U2U relay UE2, wherein LID#1 is replaced by LID#2.

U2U relay UE2 understands that it received the PDU on the hop from U2U relay UE1, and that the PDU comprises LID#2. In its mapping table, this combination of hop ID and LID is mapped to the hop to the DST UE associated with the LID#3. Accordingly, U2U relay UE2 forwards the PDU on the hop to DST UE in direct U2U communication, and replaces LID#2 by LID#3 in the PDU. Thus, the data finally arrives at DST UE.

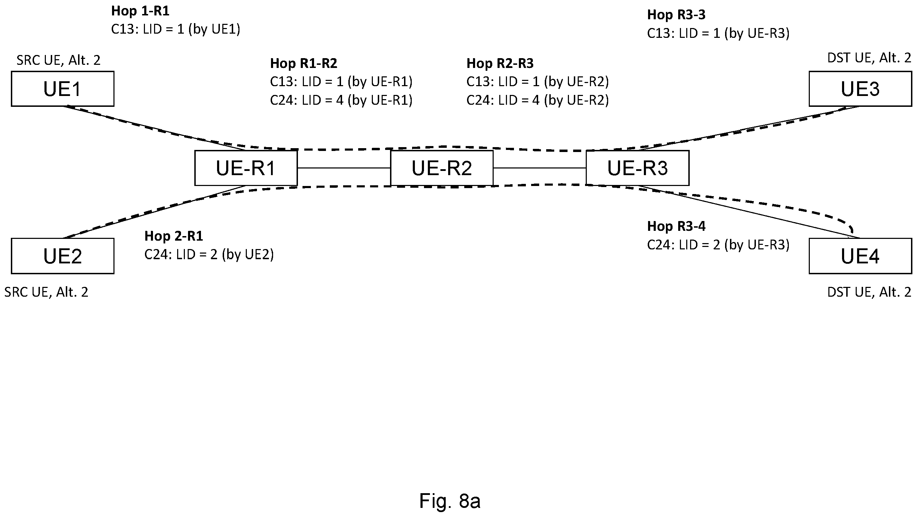

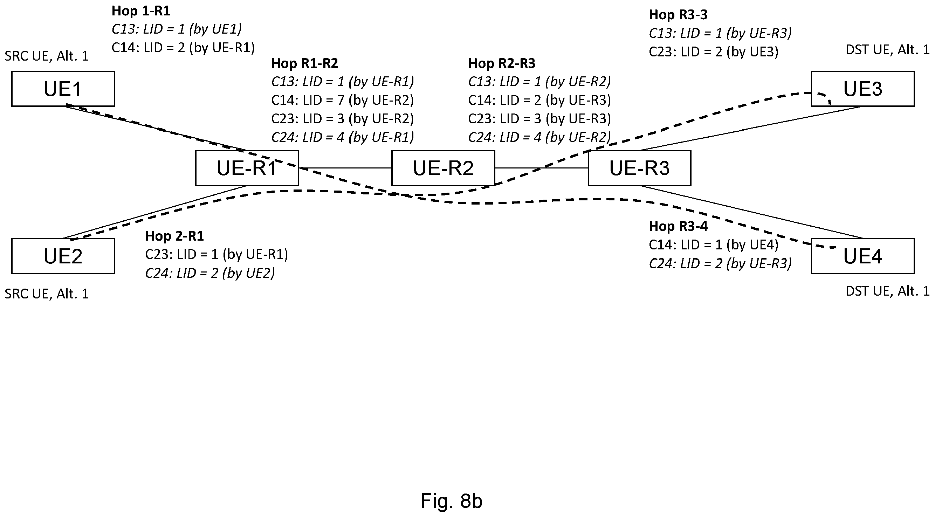

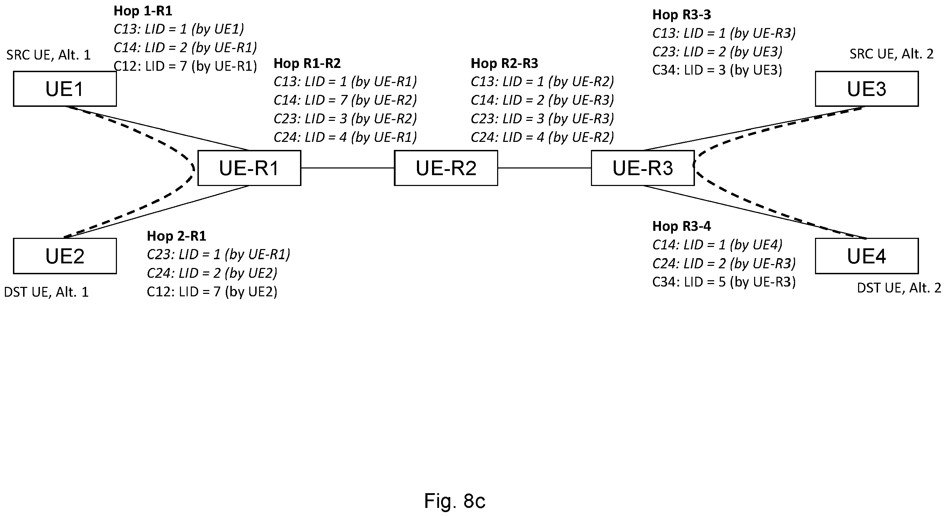

In a system comprising a number of UEs, each UE may be either SRC UE or DST UE or relay UE for a specific U2U relay communication. Furthermore, the connection of each relay communication in such a system may be established by either the Alternative 1 or the Alternative 2. An example of such a system is shown in Fig. 8 comprising Figs. 8a to 8c. In this example, each of UE1 to UE4 is connected with each of the other ones of UE1 to UE4 via one or more of the relay UEs UE-R1 to UE-R3. In Fig. 8, the hops are designated by the numbers of the endpoints of the hops (i.e. hop 1-R1 means the hop between UE1 and UE-R1) and the U2U relay communication is designated by Cxy, wherein x and y are the numbers of the endpoints of the U2U relay communication. For example, C13 means the U2U relay communication between UE1 and UE3. In each of Figs. 8a to 8c, two U2U relay communications are additionally established, indicated by the thick dashed lines.

As shown in Fig. 8a, the connections for the communications C13 and C24 are set up. UE1 is the SRC for C13. Alternative 2 is used. Hence, UE1 assigns LID = 1 to C13 on the hop 1-R1 in a DCR message. UE-R1 sends DCR to UE-2, wherein LID = 1 is associated to C13 on the hop R1-R2. Correspondingly UE-R2 sends DCR to UE-R3 with a LID = 1. Finally, UE-R3 sends DCR to UE3 with LID = 1 for C13. Thus, C13 is established.

Then, C24 is established with UE2 = SRC UE and UE4 = DST UE. Alternative 2 is used. UE2 may assign an arbitrary LID for the communication C24 on hop 2-R1. In this case, LID = 2 is determined by UE2. However, UE-R1 is not free in determining the LID for C24 on the hop to UE-R2, because LID = 1 is already used for communication C13. Accordingly, UE-R1 determines LID = 4 for C24 on the hop R1-R2. Correspondingly, UE-R2 is not free in determining the LID for C24 on the hop R2-R3 because LID = 1 is already used by C13 on this hop. Accordingly, UE-R2 determines LID = 4 for C24 on the hop R2-R3. UE-R3 may select an arbitrary LID for the hop R3-4 for the communication C24. In this example, it determines LID = 1. Thus, the connection for the U2U relay communication C24 is established, too.

In the example, after the establishments of C13 and C24, C14 and C23 are established, as shown in Fig. 8b. In this case, again UE1 and UE2 are SRC UEs, and UE3 and UE4 are DST UEs. However, for the establishing, in these cases the Alternative 1 is used. In detail:
For establishing C23, UE3 is not free in determining the LID on hop R3-3, because on this hop LID = 1 is used for C13. Accordingly, UE3 determines LID = 2 for C23 on hop R3-3. This LID is provided to UE-R3 by DCA. UE-R3 is not free in determining the LID for C23 on the hop R2-R3, because the LIDs 1 and 4 are already used on this hop for C13 and C24. Accordingly, UE-R3 determines LID = 3 for C23 on the hop R2-R3. Correspondingly, UE-R2 determines LID = 3 for C23 on the hop R1-R2, and UE-R1 determines LID = 1 for C23 on the hop 2-R1.

Correspondingly, respective LIDs are assigned to C14 on the respective hops between UE1 and UE4.

As shown in Fig. 8c, C12 and C34 are set up. In C12, UE1 is the SRC UE and UE2 is the DST UE. Alternative 1 is used. Accordingly, UE2 determines an LID different from 1 and 2 already used on the hop 2-R1 (here: LID = 7) for C12 on the hop 2-R1. UE-R1 determines LID = 7 on the hop 1-R1 for C12. This LID is different from 1 and 2 already used on the hop 1-R1.

For establishing the U2U relay communication C34, UE3 is SRC UE and UE4 is DST UE. Alternative 2 is used. Accordingly, UE3 determines LID = 3 for C34 on hop R3-3. UE-R3 determines LID = 5 for C34 on the hop R3-4. Thus, further connections for the communications C12 and C34 are established.

Table 1 shows the mapping table UE-R1 in the example of Fig. 8c. Note that the mapping table of this relay UE need not to store an identifier of the respective U2U relay communication for each record. Table 2 shows a mapping table for UE1 in the example of Fig. 8c. In this mapping table, the U2U relay communication is identified and mapped to a certain combination of a hop ID and a LID.

**Table 1: Mapping table of UE-R1 in the example of Fig. 8c**

| Link ID | Local ID | Link ID | Local ID |
|---|---|---|---|
| 1-R1 | 1 | R1-R2 | 1 |
| 1-R1 | 2 | R1-R2 | 7 |
| 1-R1 | 7 | 2-R1 | 7 |
| 2-R1 | 1 | R1-R2 | 3 |
| 2-R1 | 2 | R1-R2 | 4 |

**Table 2: Mapping table of UE1 in the example of Fig. 8c**

| U2U relay Communication | Link ID | Local ID |
|---|---|---|
| C13 | 1-R1 | 1 |
| C14 | 1-R1 | 2 |
| C12 | 1-R1 | 7 |

If a reselection of a relay UE in the U2U relay communication is performed this may not impact the end-to-end connection. Namely, in this case, the respective hops and the respective LIDs may be exchanged in the mapping tables. However, the direction of assigning the LIDs is the same as that at the original setup (i.e., from the DST UE to the SRC UE in Alternative 1, and from SRC UE to DST UE in Alternative 2). Note that in multi-hop U2U relay connections, the reselection of a serving U2U relay UE may not have an end-to-end impact to any of the SRC UE and the DST UE. However, the reselection of the serving U2U relay UE in a two-hop U2U relay connection has an end-to-end impact to both the SRC UE and the DST UE. In this case, the reassignment of the LIDs may be considered as a new assignment.

The LIDs are used on the U2U relay adaptation layer by the SRC UE, the DST UE and the serving U2U relay UEs for SL U2U relay based data transmissions in both directions, from the SRC UE to DST UE (SRC UE = TX UE, DST UE = RX UE) and from DST UE to the SRC UE (DST UE = TX UE, SRC UE = RX UE).

In some example embodiments, the SRC UE, or DST UE, or one of the serving U2U Relay UEs may initiate a local reassignment of the local ID it assigned for one of the hops (the hope towards SRC UE in case of Alternative 1, the hop towards DST UE in case of Alternative 2) forming a portion of a connection of a U2U relay communication. Such reassignment may be useful e.g. for some preferred local ID alignment. Also in this case, the initiating UE has to take care that the new local ID is unique among the local IDs for the one of the hops.

In some example embodiments using the Alternative 2, the SRC UE may be configured to determine whether or not to initiate the local ID assignment when starting the L2 E2E connection establishment towards the DST UE. For example, the unicast DCR to the next selected U2U Relay UE may comprise a corresponding flag. As another option, the relay UE may understand that local ID assignment is desired if the unicast DCR command comprises a local ID and not desired if the unicast DCR command does not comprise a local ID.

In some example embodiments using the Alternative 1, the DST UE may be configured to determine whether to or not to initiate the local ID assignment when selecting a U2U Relay UE among those candidates from which DCR messages as originated from the SRC UE are received. The corresponding DCA may comprise a corresponding flag. As another option, the relay UE may understand that local ID assignment is desired if the unicast DCA command comprises a local ID and not desired if the unicast DCA command does not comprise a local ID.

In some example embodiments, any of the SRC UE, the DST UE, or one of the serving U2U Relay UEs may initiate a request for an E2E reassignment of local IDs or an E2E connection reestablishment towards the SRC UE or the DST UE. This may be triggered, for example, in case that a local U2U relay reselection applied to one or more of the serving U2U relay UEs in multi-hop U2U relays which may not cause an E2E impact to both the SRC UE and the DST UE (as described hereinabove) is performed but for some reasons taking longer time than expected (e.g., a preconfigured timer guarding such the event expires) or without an expected local ID reassignment.

In some example embodiments, SL HARQ with feedback is used for assigning the local ID over the egress hop or, that is, for transmitting the unicast DCR or DCA in which the local ID is included for the local ID assignment. As another option to ensure that the LID is transmitted reliably on the respective hop, a local immediate acknowledgement on higher layer over the hop for such the DCR or DCA may be used. As still another option, one may omit any measures to ensure that the UE at the other terminating end of the hop reliably receives the LID.

In some example embodiments, a U2U Relay UE serving the E2E connection of the U2U relay communication between the SRC UE and the DST UE in multi-hop U2U relays indicates the ProSe L2 ID of the next-hop U2U Relay UE for the U2U relay communication to the previous-hop U2U Relay UE for the U2U relay communication. Here "next-hop" and "previous hop" indicate the hops in the direction of the establishing the connection (from DST UE to SRC UE in case of the Alternative 1, from SRC UE to DST UE in case of the Alternative 2). Thus, a local coordination between the previous-hop U2U Relay UE and the next-hop U2U Relay UE is enabled for a local U2U relay reselection of the U2U Relay UE and/or a local ID reassignment without E2E impact to both the SRC UE and the DST UE.
- In another (corresponding) option according to some example embodiments, the relay UEs may not know about the relay UEs terminating the next (or previous) hops. However, they know about the SRC UE and the DST UE of the communication. If a first relay UE (e.g. UE-R1 in a communication path SRC UE - UE-R1 - UE-R2 - UE-R3 - UE-R4 - DST UE) wants to reselect a relay UE (e.g. UE-R2) terminating one of the hops of the communication (e.g. because a hop is broken), it may broadcast DCR indicating that the request is for the communication between SRC UE and DST UE and that the hop is for the direction towards SRC UE or DST UE, respectively. Potentially, this DCR may be forwarded by one or more candidate relay UEs until a serving relay UE (e.g. UE-R3) already relaying the communication between SRC UE and DST UE receives the (potentially forwarded) DCR. UE-R3 may reply to this DCR by DCA which may be forwarded to UE-R1 (if needed). Thus, UE-R1 may replace the hop to UE-R2 by one or more other hops such that the chain of hops terminates at UE-R3. Outside the communication path between UE-R1 and UE-R3 (in particular: at SRC UE and DST UE), this reassignment does not have any impact. Note that in this example, UE-R1 may receive plural DCA messages, namely from the same "UE-R3" via different communication paths (chain of hops) between UE-R3 and UE-R1, and/or from different serving relay UEs (e.g. UE-R3 and UE-R4) which were originally involved in the communication path between SRC UE and DST UE. In such a case, UE-R1 may select one of the corresponding communication paths. This option may be robust in terms of finding an appropriate communication path but may cause significant overhead, as it may not keep the reselection of the U2U Relay UE local to the immediate previous-hop and next-hop U2U Relay UEs of the U2U Relay UE.

The local ID assignment according to some example embodiments of the invention is robust against modifications of ProSe L2 IDs at the SRC UE, DST UE or serving U2U Relay UE. That is, a modification of ProSe L2 ID at any of the UEs involved in the L2 E2E connection between the SRC UE and the DST UE does not cause changes to the assigned local IDs (and vice versa).

The local ID may be shorter than the IDs (e.g. L2 IDs) of the SRC UE and the DST UE or the ID of the serving relay UE on which the respective hop terminates. For example, if the L2 IDs of the UEs have 24 bits, the local ID of the U2U relay communication on a hop may have 23 bits or less, for example, 8 bits as the Local ID of Remote UEs in L2 U2N relay, as shown in Fig. 3. Preferably, the local ID of the U2U relay communication on a hop has much less bits (at least 3 bits less) than any UE ID that may be used in the mapping. For example, if the number of U2U relay communications over a hop is limited to a number between 2ⁿ⁻¹+1 to 2ⁿ, the local ID may have n bits (for example, n = 3, or n = 4, or n = 5, or n = 6, or n = 7).

Some example embodiments of the invention have at least one of the following technical advantages:
(i) It is avoided to involve many (or even all) U2U Relay UE candidates along different paths for the E2E SL connection between the SRC UE and the DST UE in the local-ID assignment. Thus, protocol overhead is minimized; and/or
(ii) The local IDs is assigned as soon as possible. Thus, U2U SL adaptation functions are enabled to use the local IDs with minimized latency along the selected path for the E2E SL connection between the SRC UE and the DST UE via serving U2U Relay UEs.

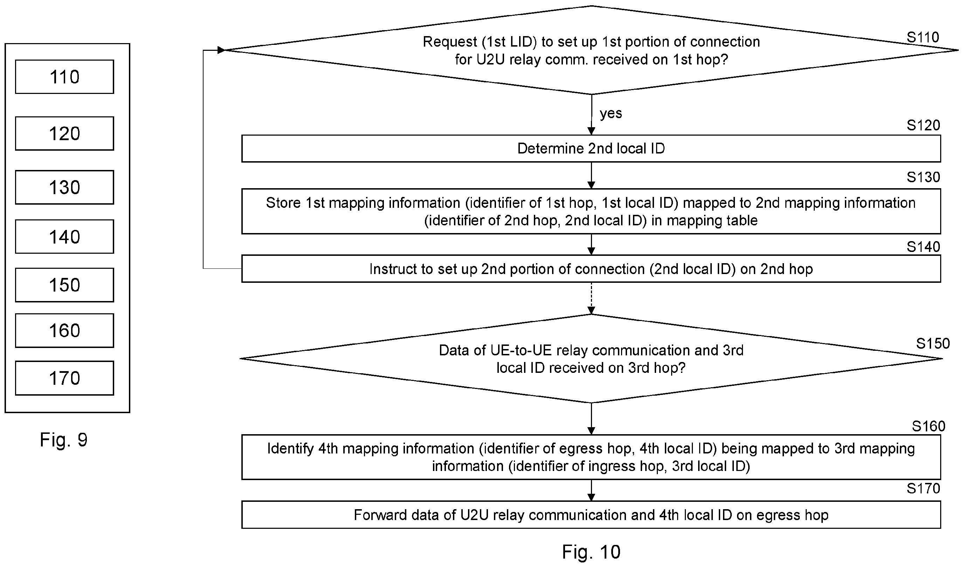

Fig. 9 shows an apparatus according to an example embodiment of the invention. The apparatus may be a terminal, such as a UE (in particular a relay UE of a U2U relay communication), or an element thereof. Fig. 10 shows a method according to an example embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises means for monitoring 110, means for determining 120, means for storing 130, means for instructing 140, means for supervising 150, means for identifying 160, and means for forwarding 170. The means for monitoring 110, means for determining 120, means for storing 130, means for instructing 140, means for supervising 150, means for identifying 160, and means for forwarding 170 may be a monitoring means, determining means, storing means, instructing means, supervising means, identifying means, and forwarding means, respectively. The means for monitoring 110, means for determining 120, means for storing 130, means for instructing 140, means for supervising 150, means for identifying 160, and means for forwarding 170 may be a monitor, determiner, storing device, instructor, supervisor, identifier, and forwarder, respectively. The means for monitoring 110, means for determining 120, means for storing 130, means for instructing 140, means for supervising 150, means for identifying 160, and means for forwarding 170 may be a monitoring processor, determining processor, storing processor, instructing processor, supervising processor, identifying processor, and forwarding processor, respectively.

S110 to S140 are performed for each U2U relay communication ("terminal-to-terminal relay communication") to establish a connection for the U2U relay communication. Each of the U2U relay communications is defined by a respective source UE and a respective destination UE. S110 to S140 are described hereinafter for one of the U2U relay communications.

The means monitoring 110 monitors, whether a relay terminal receives, on a first hop terminating at the relay terminal, a request to set up a first portion of a connection for the terminal-to-terminal relay communication via the first hop (S110). The request comprises a first local identifier. For example, the request may be a DCA command (for Alternative 1) or a DCR command (for Alternative 2).

If the relay terminal receives the request (S110 = yes), the means for determining 120 determines a second local identifier such that the second local identifier is unique among all local identifiers associated, in a mapping table, with an identifier of a second hop (S120). The second hop terminates at the relay terminal.

The means for storing 130 stores, in the mapping table, a first mapping information mapped to a second mapping information (S130). The first mapping information comprises the identifier of the first hop associated with the first local identifier received in S110. The second mapping information comprises the identifier of the second hop associated with the second local identifier determined in S120.

The means for instructing 140 instructs to set up a second portion of the connection for the terminal-to-terminal relay communication via the respective second hop (S140). The instruction of S140 comprises the second local identifier.

As mentioned above, S110 to S140 may be repeated for establishing a respective connection for each or one or more U2U relay communications between a respective SRC UE and a respective DST UE. If one or more of these connections are established they may be used for data transmission. The data transmission may be in the direction from SRC UE (= TX UE) to DST UE (= RX UE) or in the direction from DST UE (= TX UE) to SRC UE (= RX UE). I.e., the terms SRC UE and DST UE may be relevant only for the establishing of the connection, and the terms TX UE and RX UE may be relevant only for the transmission of data on the connection. S150 to S170 are related to data transmission of one of the U2U relay communications for which a connection is established.

The means for supervising 150 supervises whether the relay terminal receives, on an ingress hop terminating at the relay terminal, data of the terminal-to-terminal relay communication comprising a third local identifier (S150).

If the relay terminal receives, on the ingress hop, the data of the terminal-to-terminal relay communication comprising the third local identifier (S150 = yes), the means for identifying 160 identifies a fourth mapping information based on a third mapping information (S160). The third mapping information comprises an identifier of the ingress hop associated with the third local identifier. The fourth mapping information comprises an identifier of an egress hop associated with a fourth local identifier. The fourth mapping information is mapped in the mapping table to the third mapping information. The egress hop terminates at the relay terminal.

The means for forwarding 170 forwards the data of the terminal-to-terminal relay communication comprising the fourth local identifier on the egress hop identified in S160 in a direct U2U communication (S170).

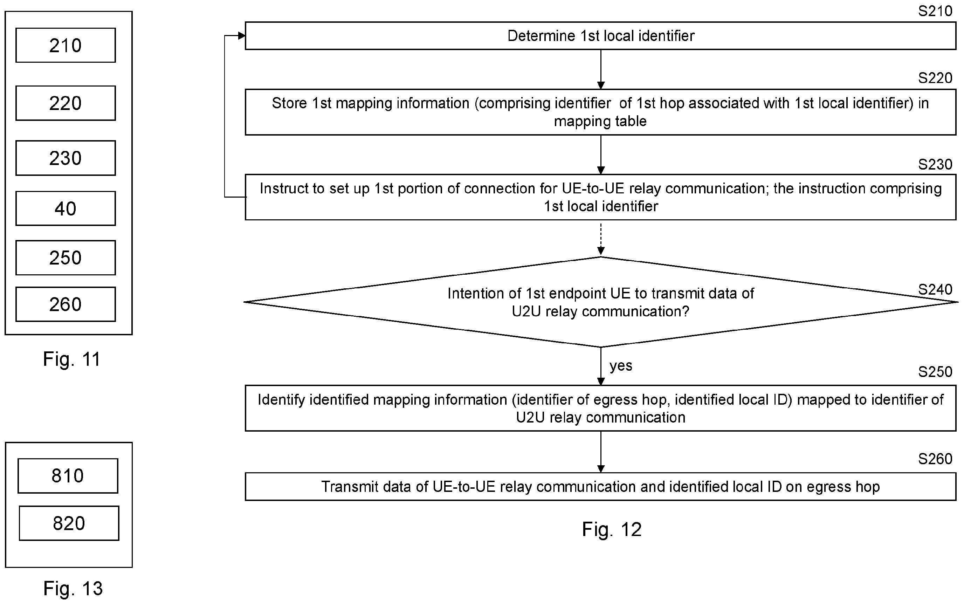

Fig. 11 shows an apparatus according to an example embodiment of the invention. The apparatus may be a terminal, such as a UE (in particular an endpoint UE such as a SRC UE or a DST UE of a U2U relay communication), or an element thereof. Fig. 12 shows a method according to an example embodiment of the invention. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises means for determining 210, means for storing 220, means for instructing 230, means for supervising 240, means for identifying 250, and means for forwarding 260. The means for determining 210, means for storing 220, means for instructing 230, means for supervising 240, means for identifying 250, and means for forwarding 260 may be a determining means, storing means, instructing means, supervising means, identifying means, and forwarding means, respectively. The means for determining 210, means for storing 220, means for instructing 230, means for supervising 240, means for identifying 250, and means for forwarding 260 may be a determiner, storing device, instructor, supervisor, identifier, and forwarder, respectively. The means for determining 210, means for storing 220, means for instructing 230, means for supervising 240, means for identifying 250, and means for forwarding 260 may be a determining processor, storing processor, instructing processor, supervising processor, identifying processor, and forwarding processor, respectively.

S210 to S230 are performed for each U2U relay communication ("terminal-to-terminal relay communication") to establish a connection for the U2U relay communication. Each of the U2U relay communications is defined by a respective source UE and a respective destination UE. S210 to S230 are described hereinafter for one of the U2U relay communications.

The means for determining 210 determines a first local identifier such that the first local identifier is unique among all local identifiers associated, in a mapping table, with an identifier of a first hop (S210). The first hop terminates at the first endpoint terminal.

The means for storing 220 stores, in the mapping table, a first mapping information mapped to an identifier of the terminal-to-terminal relay communication (S220). The first mapping information comprises the identifier of the first hop associated with the first local identifier

The means for instructing 230 instructs to set up a first portion of a connection for the terminal-to-terminal relay communication via the respective first hop (S230). The instruction of S230 comprises the first local identifier.

As mentioned above, S210 to S230 may be repeated for establishing a respective connection for each or one or more U2U relay communications between a respective first endpoint UE (SRC UE or DST UE) and a second endpoint UE (DST UE or SRC UE). If one or more of these connections are established they may be used for data transmission. The data transmission may be in the direction from SRC UE (= TX UE) to DST UE (= RX UE) or in the direction from DST UE (= TX UE) to SRC UE (= RX UE). I.e., the terms SRC UE and DST UE may be relevant only for the establishing of the connection, and the terms TX UE and RX UE may be relevant only for the transmission of data on the connection. S240 to S260 are related to data transmission of one of the U2U relay communications for which a connection is established.

The means for supervising 240 supervises whether the first endpoint terminal (SRC UE or DST UE) intends to transmit data of the terminal-to-terminal relay communication to the second endpoint terminal (DST UE or SRC UE) of the terminal-to-terminal relay communication (S240).

If the first endpoint terminal intends to transmit the data of the terminal-to-terminal relay communication (S240 = yes), the means for identifying 250 identifies, based on the identifier of the terminal-to-terminal relay communication, an identified mapping information (S250). The identified mapping information comprises an identifier of an egress hop associated with an identified local identifier. The identified mapping information is mapped in the mapping table to the terminal-to-terminal relay communication. The egress hop terminates at the first endpoint terminal.

The means for transmitting 250 transmits the data of the terminal-to-terminal relay communication comprising the identified local identifier on the egress hop identified in S240 in a direct U2U communication (S250).

Fig. 13 shows an apparatus according to an example embodiment of the invention. The apparatus comprises at least one processor 810, at least one memory 820 storing instructions that, when executed by the at least one processor 810, cause the apparatus at least to perform the method according to at least one of the following figures and related description: Fig. 10 or Fig. 12.

Some example embodiments are explained with respect to a 5G network. However, the invention is not limited to 5G. It may be used in other communication networks, too, e.g. in previous of forthcoming generations of 3GPP networks such as 4G, 6G, or 7G, etc. It may be used in non-3GPP communication networks providing a U2U relay communication service, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a terminal, such as a UE or a MTC device, or a component thereof, an apparatus embodying the same, a method for controlling and/or operating the same, and computer program(s) controlling and/or operating the same as well as mediums carrying such computer program(s) and forming computer program product(s). Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
one or more processors, and
memory storing instructions that, when executed by the one or more processors, cause the apparatus to perform:
for each of one or more terminal-to-terminal relay communications between a respective source terminal and a respective destination terminal:
- monitoring, whether a relay terminal receives, on a respective first hop terminating at the relay terminal, a request to set up a first portion of a connection for the respective terminal-to-terminal relay communication via the respective first hop, wherein the request comprises a respective first local identifier;
- determining, if the relay terminal receives the request, a respective second local identifier such that the respective second local identifier is unique among all local identifiers associated, in a mapping table, with an identifier of a respective second hop terminating at the relay terminal;
- storing, in the mapping table, a respective first mapping information mapped to a respective second mapping information, wherein the respective first mapping information comprises the identifier of the respective first hop associated with the respective first local identifier, and the respective second mapping information comprises the identifier of the respective second hop associated with the respective second local identifier; and
- instructing to set up a second portion of the connection for the respective terminal-to-terminal relay communication via the respective second hop, wherein the instruction comprises the respective second local identifier;
supervising whether the relay terminal receives, on an ingress hop terminating at the relay terminal, data of one of the one or more terminal-to-terminal relay communications comprising a third local identifier;
identifying, based on a third mapping information comprising an identifier of the ingress hop associated with the third local identifier, a fourth mapping information comprising an identifier of an egress hop associated with a fourth local identifier if the relay terminal receives, on the ingress hop, the data of the one of the one or more terminal-to-terminal relay communications comprising the third local identifier, wherein the fourth mapping information is mapped in the mapping table to the third mapping information, and the egress hop terminates at the relay terminal; and
forwarding the data of the one of the one or more terminal-to-terminal relay communications comprising the fourth local identifier on the egress hop.

2. The apparatus according to claim 1, wherein the instructions, when executed by the one or more processors, further cause the apparatus to perform:
monitoring whether the relay terminal receives a first command to form the first portion of the connection for a first terminal-to-terminal relay communication of the one or more terminal-to-terminal relay communications via a fifth hop different from the second hop after the first portion of the connection for the first terminal-to-terminal relay communication was formed via the first hop, wherein the first command comprises a fifth local identifier, and the fifth hop terminates at the relay terminal;
replacing, in the mapping table, the first mapping information for the first terminal-to-terminal relay communication by a fifth mapping information, wherein the fifth mapping information comprises an identifier of the fifth hop associated with the fifth local identifier.

3. The apparatus according to any of claims 1 to 2, wherein the instructions, when executed by the one or more processors, further cause the apparatus to perform:
monitoring whether the relay terminal receives a second command to form the second portion of the connection for a second terminal-to-terminal relay communication of the one or more terminal-to-terminal relay communications via a sixth hop different from the second hop after the second portion of the connection for the second terminal-to-terminal relay communication was formed via the second hop, wherein the sixth hop terminates at the relay terminal;
determining a sixth local identifier such that the sixth local identifier is unique among all local identifiers associated, in the mapping table, with an identifier of the sixth hop if the relay terminal receives the second command;
replacing, in the mapping table, the second mapping information for the second terminal-to-terminal relay communication by a sixth mapping information, wherein the sixth mapping information comprises the identifier of the sixth hop associated with the sixth local identifier; and
instructing to set up the second portion of the connection for the second terminal-to-terminal relay communication via the respective sixth hop, wherein the instruction comprises the sixth local identifier.

4. The apparatus according to any of claims 1 to 3, wherein for at least one of the one or more terminal-to-terminal relay communications:
the request to set up the first portion of the connection for the respective terminal-to-terminal relay communication via the respective first hop comprises a first direct communication accept command; and
the instruction to set up the second portion of the connection for the respective terminal-to-terminal relay communication via the respective second hop comprises a second direct communication accept command.

5. The apparatus according to any of claims 1 to 4, wherein for at least one of the one or more terminal-to-terminal relay communications:
the request to set up the first portion of the connection for the respective terminal-to-terminal relay communication via the respective first hop comprises a first direct communication request command; and
the instruction to set up the second portion of the connection for the respective terminal-to-terminal relay communication via the respective second hop comprises a second direct communication request command.

6. The apparatus according to any of claims 1 to 5, wherein, for each of the one or more terminal-to-terminal relay communications, at least one of the following identifiers is a layer 2 identifier of a corresponding neighbor terminal, or each of the following identifiers is the layer 2 identifier of the corresponding neighbor terminal:
- the identifier of the respective first hop,
- the identifier of the respective second hop,
- the identifier of the respective third hop, or
- the identifier of the respective fourth hop;
wherein the corresponding neighbor terminal is connected to the relay terminal via the corresponding one of the respective first hop, the respective second hop, the respective third hop, or the respective fourth hop.

7. The apparatus according to any of claims 1 to 6, wherein for each of the one or more terminal-to-terminal relay communications, at least one of:
the respective first local identifier is shorter than a layer 2 identifier; or
the respective second local identifier is shorter than a layer 2 identifier.

8. The apparatus according to any of claims 1 to 7, wherein the instructions, when executed by the one or more processors, further cause the apparatus to perform, for each of the one or more terminal-to-terminal relay communications:
the determining the respective second local identifier without taking into account at least one of the following identifiers or without taking into account any of the following identifiers:
- an identifier of the respective source terminal,
- an identifier of the respective destination terminal,
- the identifier of the respective first hop, or
- the respective first local identifier.

9. The apparatus according to any of claims 1 to 8, wherein the data comprises a protocol data unit of a sidelink relay adaptation layer used for the terminal-to-terminal relay communication, and a header of the protocol data unit includes the third local identifier.

10. Apparatus comprising:
one or more processors, and
memory storing instructions that, when executed by the one or more processors, cause the apparatus to perform:
for each of one or more terminal-to-terminal relay communications between a first endpoint terminal and a respective second endpoint terminal:
- determining a respective first local identifier such that the respective first local identifier is unique among all local identifiers associated, in a mapping table, with an identifier of a respective first hop terminating at the first endpoint terminal;
- storing, in the mapping table, a respective first mapping information mapped to an identifier of the respective terminal-to-terminal relay communication, wherein the respective first mapping information comprises the identifier of the respective first hop associated with the respective first local identifier; and
- instructing to set up a first portion of a connection for the respective terminal-to-terminal relay communication via the respective first hop, wherein the instruction comprises the respective first local identifier;
supervising whether the first endpoint terminal intends to transmit data of one of the one or more terminal-to-terminal relay communications to the respective second endpoint terminal;
identifying, based on the identifier of the one of the one or more terminal-to-terminal relay communication, an identified mapping information comprising an identifier of an egress hop associated with an identified local identifier if the first endpoint terminal intends to transmit the data of the one of the one or more terminal-to-terminal relay communications, wherein the identified mapping information is mapped in the mapping table to the identifier of the one of the one or more terminal-to-terminal relay communications, and the egress hop terminates at the first endpoint terminal; and
transmitting the data of the one of the one or more terminal-to-terminal relay communications comprising the identified local identifier on the egress hop.

11. The apparatus according to claim 10, wherein the instructions, when executed by the one or more processors, further cause the apparatus to perform:
monitoring whether the first endpoint terminal intends to form the first portion of the connection for a first terminal-to-terminal relay communication of the one or more terminal-to-terminal relay communications via a second hop different from the first hop after the first portion of the connection for the first terminal-to-terminal relay communication was formed via the first hop, wherein the second hop terminates at the first endpoint terminal;
determining a second local identifier such that the second local identifier is unique among all local identifiers associated, in the mapping table, with an identifier of the second hop if the first endpoint terminal intends to form the first portion of the connection for the first terminal-to-terminal relay communication via the second hop;
replacing, in the mapping table, the first mapping information by a second mapping information, wherein the second mapping information comprises the identifier of the second hop associated with the second local identifier; and
instructing to set up the first portion of the connection for the first terminal-to-terminal relay communication via the second hop, wherein the instruction comprises the second local identifier.

12. The apparatus according to any of claims 10 to 11, wherein, for each of the one or more terminal-to-terminal relay communications, at least one of the following identifiers is a layer 2 identifier of a corresponding neighbor terminal, or each of the following identifiers is the layer 2 identifier of the corresponding neighbor terminal:
- the identifier of the respective first hop, or
- the identifier of the egress hop;
wherein the respective first hop or the egress hop terminates at the corresponding neighbor terminal and the first endpoint terminal.

13. The apparatus according to any of claims 10 to 12, wherein for each of the one or more terminal-to-terminal relay communications:
the respective first local identifier is shorter than a layer 2 identifier.

14. The apparatus according to any of claims 10 to 13, wherein the instructions, when executed by the one or more processors, further cause the apparatus to perform, for each of the one or more terminal-to-terminal relay communications:
the determining the respective first local identifier without taking into account at least one of the following identifiers or without taking into account any of the following identifiers:
- an identifier of the first endpoint terminal,
- an identifier of the respective second endpoint terminal, or
- the identifier of the respective first hop.

15. The apparatus according to any of claims 10 to 14, wherein for at least one of the one or more terminal-to-terminal relay communications:
the first endpoint terminal is a source terminal of the respective terminal-to-terminal relay communication; and
the instruction to set up the first portion of the connection for the respective terminal-to-terminal relay communication via the respective first hop comprises a direct communication request command.

16. The apparatus according to any of claims 10 to 15, wherein for at least one of the one or more terminal-to-terminal relay communications:
the first endpoint terminal is a destination terminal of the respective terminal-to-terminal relay communication; and
the instruction to set up the first portion of the connection for the respective terminal-to-terminal relay communication via the respective first hop comprises a direct communication accept command.

17. Method comprising:
for each of one or more terminal-to-terminal relay communications between a respective source terminal and a respective destination terminal:
- monitoring, whether a relay terminal receives, on a respective first hop terminating at the relay terminal, a request to set up a first portion of a connection for the respective terminal-to-terminal relay communication via the respective first hop, wherein the request comprises a respective first local identifier;
- determining, if the relay terminal receives the request, a respective second local identifier such that the respective second local identifier is unique among all local identifiers associated, in a mapping table, with an identifier of a respective second hop terminating at the relay terminal;
- storing, in the mapping table, a respective first mapping information mapped to a respective second mapping information, wherein the respective first mapping information comprises the identifier of the respective first hop associated with the respective first local identifier, and the respective second mapping information comprises the identifier of the respective second hop associated with the respective second local identifier; and
- instructing to set up a second portion of the connection for the respective terminal-to-terminal relay communication via the respective second hop, wherein the instruction comprises the respective second local identifier;
supervising whether the relay terminal receives, on an ingress hop terminating at the relay terminal, data of one of the one or more terminal-to-terminal relay communications comprising a third local identifier;
identifying, based on a third mapping information comprising an identifier of the ingress hop associated with the third local identifier, a fourth mapping information comprising an identifier of an egress hop associated with a fourth local identifier if the relay terminal receives, on the ingress hop, the data of the one of the one or more terminal-to-terminal relay communications comprising the third local identifier, wherein the fourth mapping information is mapped in the mapping table to the third mapping information, and the egress hop terminates at the relay terminal; and
forwarding the data of the one of the one or more terminal-to-terminal relay communications comprising the fourth local identifier on the egress hop.

18. Method comprising:
for each of one or more terminal-to-terminal relay communications between a first endpoint terminal and a respective second endpoint terminal:
- determining a respective first local identifier such that the respective first local identifier is unique among all local identifiers associated, in a mapping table, with an identifier of a respective first hop terminating at the first endpoint terminal;
- storing, in the mapping table, a respective first mapping information mapped to an identifier of the respective terminal-to-terminal relay communication, wherein the respective first mapping information comprises the identifier of the respective first hop associated with the respective first local identifier; and
- instructing to set up a first portion of a connection for the respective terminal-to-terminal relay communication via the respective first hop, wherein the instruction comprises the respective first local identifier;
supervising whether the first endpoint terminal intends to transmit data of one of the one or more terminal-to-terminal relay communications to the respective second endpoint terminal;
identifying, based on the identifier of the one of the one or more terminal-to-terminal relay communication, an identified mapping information comprising an identifier of an egress hop associated with an identified local identifier if the first endpoint terminal intends to transmit the data of the one of the one or more terminal-to-terminal relay communications, wherein the identified mapping information is mapped in the mapping table to the identifier of the one of the one or more terminal-to-terminal relay communications, and the egress hop terminates at the first endpoint terminal; and
transmitting the data of the one of the one or more terminal-to-terminal relay communications comprising the identified local identifier on the egress hop.

19. A computer program product comprising a set of instructions which, when executed on an apparatus, is configured to cause the apparatus to carry out the method according to any of claims 17 and 18.
